# EUROPEAN PATENT SPECIFICATION

(11) **EP 3 001 164 B1**
(45) Date of publication and mention of the grant of the patent: **27.03.2019**
(21) Application number: 14186307.6
(22) Date of filing: 25.09.2014
(51) Int. Cl.: G01L 5/28, B25J 9/16

(54) **Evaluation of static brake torque in a robot**
Auswertung des statischen Bremsmoments in einem Roboter
Évaluation du couple de freinage statique dans un robot

(43) Date of publication of application: 30.03.2016
(73) Proprietor: ABB Schweiz AG, 5400 Baden (CH)
(72) Inventor: Eriksson, Daniel, 724 82 Västerås (SE); Jonsson, Ingvar, 723 49 Västerås (SE); Moberg, Stig, 724 81 Västerås (SE); Brogardh, Torgny, 431 38 Mölndal (SE)
(74) Representative: Savela, Reino Aleksi

(56) References cited:
- EP-A2- 1 710 549
- EP-A2- 2 759 382
- US-A1- 2010 319 442
- US-A1- 2014 000 355

## Description

### TECHNICAL FIELD OF THE INVENTION

The present invention relates to the field of robots. The invention more particularly relates to a method, device, and computer program product for evaluating a static brake torque of a brake for a robot joint using a motor controlled via a robot controller as well as to a robot arrangement comprising such a device.

### DESCRIPTION OF RELATED ART

The quality of the brake of a robot is important for many reasons, such as safety.

EP 2 10978 933 describes a dynamic test method for a robot. In this document a robot joint is brought to a standstill and the position, time and deceleration are then used as measures of the quality of the brake.

One parameter of the brake that may be of interest to investigate is the brake torque. A good enough brake torque is therefore an indication that the robot is safe to be operated.

One type of brake torque test that may be used is a dynamic brake torque test. In such a test, a robot joint is first set to move and then the brake is applied and the brake torque determined.

However, in order to investigate the brake it may not be enough to investigate the dynamic brake torque. It may also be important to investigate the static brake torque, i.e. the braking ability when the joint is being moved from a standstill position.

It would also be advantageous if such static brake torque determinations could be performed in a simple structure without an excessive amount of sensors while at the same time allowing the brake torque to be evaluated in a safe and reliable way.

US 2014/0000355 discloses a brake abnormality diagnosis device which diagnoses an abnormality in a brake of a brake-equipped motor provided in a robot or a machine tool. The device performs a diagnosis as to whether or not there is an abnormality in the brake, while the motor is excited and the brake is activated and if it is diagnosed that there is an abnormality in the brake, notifies the abnormality in the brake without interrupting the excitation of the motor and without releasing the brake.

US 2010/0319442 discloses a method for testing a drive arrangement and an accordingly equipped converter. In the method an actual torsional backlash of an engine brake, which is preferably configured as a spring-operated brake, is determined and compared to a permitted torsional backlash. To this end, a test torque, which is smaller than a holding torque of the brake, is moved counter to the closed brake up to a stop, preferably in both directions of rotation.

EP 1710549 discloses a method involving testing the brakes of a motor with a predefined torque and then comparing the position of the motor with its starting position. Higher torque is used in testing the brakes. The method is performed at a certain time and the determined values for every testing are stored for comparison.

EP 2759382 discloses a robot having an operation mode setting unit that sets an operation mode of the robot. The operation mode setting unit changes a correction factor multiplied by the maximum acceleration and the maximum deceleration of an arm and servo gain of a servo circuit, and thereby, selectively sets three operation modes of a first operation mode, a second operation mode in which the arm operates faster than that in the first operation mode, and a third operation mode in which the arm vibrates less than that in the first operation mode.

### SUMMARY OF THE INVENTION

The present invention is therefore directed towards safely and reliably investigating the static brake torque of a brake for a robot motor without relying on extensive testing structures.

This object is according to a first aspect of the present invention achieved through a method for evaluating a static brake torque in accordance with claim 1.

The object is according to a second aspect achieved through a brake torque evaluating device in accordance with claim 8.

The object is according to a third aspect achieved through a robot arrangement in accordance with claim 16.

The object is according to a fourth aspect achieved through a computer program product in accordance with claim 17.

The present invention has many advantages. It allows safe and reliable investigation of the static brake torque of a brake for a robot motor. This is also done without relying on extensive testing structures or the use of sensors on the robot joints. The invention is furthermore easy to implement and can easily be retrofitted into a robot controller.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 schematically shows a robot arrangement comprising a robot and a static brake torque evaluating device,
fig. 2 schematically shows a joint of the robot with a brake and a motor,
fig. 3 schematically shows a block schematic of the static brake torque evaluating device connected to the robot, where the device comprises a torque evaluating unit and a robot controller,
fig. 4 shows a number of method steps being performed in a method for evaluating a static brake torque according to an example not forming part of the invention,
fig. 5 shows a number of method steps in a method for evaluating a static brake torque according to a first embodiment, and
fig. 6 schematically shows a computer program product in the form of a CD Rom disc comprising computer program code for compensating drift.

### DETAILED DESCRIPTION OF EMBODIMENTS

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. In other instances, detailed descriptions of well known devices, circuits, and methods are omitted so as not to obscure the description of the present invention with unnecessary detail.

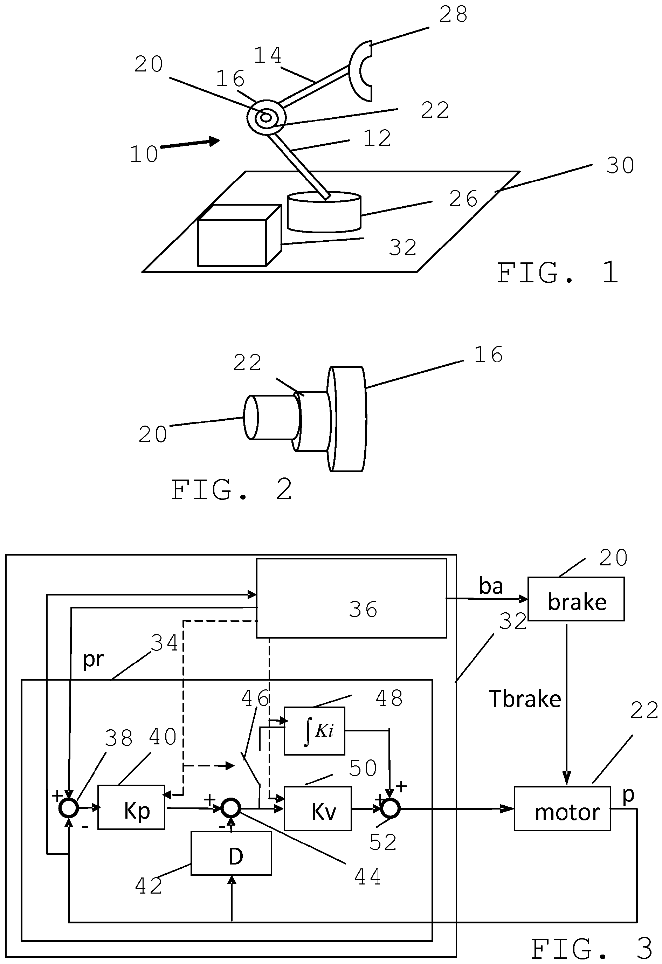

Fig. 1 schematically shows a robot arrangement comprising a robot 10 and a brake torque evaluating device 32. The robot 10 comprises a number of arm sections 12, 14 connected to each other via joints 16. The robot 10 shown in fig. 1 is simplified and therefore only two arm sections are shown; a first and a second arm section 12 and 14, connected to each other via a joint. This means that in this example only one joint 16 which joins the first and second arm sections 12 and 14 is shown. It should however be realized that a robot normally comprises many more arm sections, typically six and consequently also several more joints, that may be controlled.

The first arm section 12 is here connected to a foundation 26. In this way the robot 10 is attached to the foundation 26. There is normally also a joint joining the first arm section 12 to this foundation 26 for allowing the first arm section 12 to be moved in relation to the foundation 26. Thereby the foundation may provide a first axis of rotation. However, this joint has been omitted from fig. 1 for the sake of clarity. The robot normally comprises a tool holder for allowing a tool to be connected to the robot 10. Such a tool is typically connected to the outermost arm section of the robot, i.e. to the arm section furthest away from the foundation 26. Consequently, in fig. 1 one such tool 28 is shown as being attached to the second arm section 14.

In order to move the second arm section 14 in relation to the first arm section 12 there is provided an actuator at the joint 16, which actuator may be implemented as a motor 22, for instance as a servo motor for moving the second arm around a second axis of rotation defined by the joint 16. At this actuator there is furthermore provided a brake 20.

In some variations it is also possible that there are one or more sensors connected to the motor. Such sensors could be provided for sensing the position of the joint 16.

The joint 16, with motor 22 and brake 20 is also schematically shown in fig. 2, which figure shows a perspective view of these elements.

In the example not forming part of the invention shown in fig. 1, the brake torque evaluating device 32 comprises a robot controller, which robot controller is connected to the robot 10 and more particularly to the motor 22. It should here be realized that the robot controller may be provided as a separate entity. It does thus not have to be a part of the brake torque evaluating device 32.

Fig. 3 shows a block schematic of the brake torque evaluating device 32 comprising the robot controller 34. The brake torque evaluating device 32 is connected to the motor 22 and the brake 20 of the robot 10. In the figure the brake torque evaluating device 32 is also shown as comprising a torque evaluating unit 36, which communicates with the robot controller 34 in order to determine the static brake torque.

The robot controller 34 comprises a first proportional control element 40 and a second proportional control element 50, where the second proportional control element is connected in parallel with an integrating control element 48. The torque evaluating unit 36 provides a first position command pr to a first input of a first subtracting element 38, which first position command may be a target joint position value. The output of the first subtracting element 38 is connected to an input of the first proportional control element 40. The first proportional control element 40 also has an output which is connected to a first input of a second subtracting element 44. The second subtracting element 44 has an output, which is connected to an input of the second proportional control element 50 as well as to an input of the integrating control element 48 via a switch 46, which switch 46 is controlled by the torque evaluating unit 36. An output of the second proportional control element 50 is connected to a first input of an adding element 52 and an output of the integrating control element 48 is connected to a second input of the adding element 52. An output of the adding element 52 is ultimately used to control the motor 22. The torque evaluating unit 36 is connected to the brake 20 for providing a brake activation signal ba to the brake. The brake 20 in turns provides a braking torque Tbrake to the motor 22, which in turn provides a joint position measurement p to a second input of the first subtracting element 38 as well as to the input of a derivative element 42. The derivative element 42 has an output connected to a second input terminal of the second subtracting element 44. As can be seen, the joint position measurement p is also provided to the torque evaluation unit 36.
The first proportional control element 40 here performs proportional control using a first, position related, proportional control factor Kp, the second proportional control element 50 performs proportional control using a second, speed related, proportional control factor Kv, while the integrating control element 48 performs integrating control using an integrating control factor Ki and the derivative element 42 estimates the motor speed from the motor position using differentiating component D. The proportional and integrating control factors may be fixed or possible to vary. It should here also be realized that it is possible to omit the switch 46 through setting Ki = 0.

It is of interest to evaluate the static brake torque of the motor 22, i.e. the brake torque of a braking activity being applied by the brake 20 to a joint that is standing still and then controlled to be moved. One example of such a joint is joint 16. The static brake torque should furthermore be possible to evaluate in a safe and reliable way without any additional sensors.

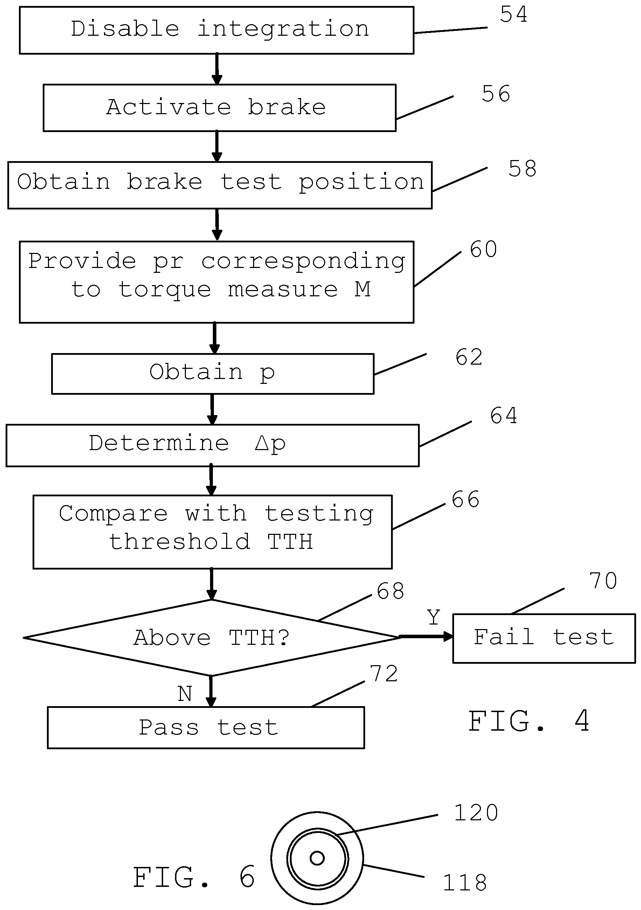

Figure 4 shows a flow chart of a number of method steps in a method for evaluating the static brake torque of a robot joint using the motor 22 and brake 20 controlled via the robot controller 34.

In normal operation integrating activity is enabled. When the switch 46 is provided, this means that it is closed. In any event, the integrating factor Ki also has a value that performs integrating action in the control. The value is thus different from zero and with advantage positive. Thereby the integrating control element 48 is active and connected in parallel with the second proportional control element 50 at the time at which the method is started. Furthermore, the motor 22 is also standing still, which means that the joint 16 is not moving. When this situation is at hand a brake torque test scheme can be started.
One of the first activities in the brake torque test scheme and the first activity is the deactivating of integration. The method is thereby started through the torque evaluating unit 36 ensuring that no integrating activity is performed. This may be done through the torque evaluating unit 36 controlling the controller 34 to discontinue or disable the integrating action or control, step 54. This may be done through the torque evaluating unit 36 controlling the switch 46 to be opened, thereby disconnecting the integrating control element 48 from the control. As an alternative or in addition to actuating a switch, it is possible for the torque evaluating unit 36 to set the integrating control factor Ki to zero.

Another of the early activities in the brake torque test scheme and a second activity is the activation of the brake 20 of the motor 22, which activity is thus performed when the joint 16 is immobile. Therefore, after deactivation of integration, the torque evaluating unit 36 activates the brake of the motor 22, step 56, which may be done through sending the brake activation signal ba to the brake 20, where the brake 20 in turn acts on the signal through applying the brake Tbrake on the motor 22.
The torque evaluating unit 36 also obtains at least one brake test position. One first such brake test position is an originating brake test position, step 58, which is the position of the joint at the time that a brake torque evaluation is to take place. As the motor 22 provides position measurements to the robot controller 34, this originating brake test position may with advantage be obtained from the robot controller 34, for instance from the second input of the first subtracting element 38.
The torque evaluating unit 36 then provides the controller 34 with the first position command pr, step 60, which may be a command that the motor 22 is to move a certain amount, such as a suitable number of radians from the originating brake test position to a target joint position of the target joint position value. The first position command may be set to correspond to a test torque M used to test the brake using the proportional control factors Kp and Kv. A control value to be used for the command may be set so that the movement from the test position Δpr = M/(Kp*Kv).
The first position command, which is generated after brake activation, is provided to the first subtracting element 38, at which the measured position p is subtracted in order to obtain the desired movement Δpr. The desired movement Δpr is then provided to the first proportional control element 40 where it is multiplied with the first proportional control factor Kp. The product Kp*Δpr is then supplied to the second subtracting element 44, from where it is supplied to the second proportional control element 50, which performs proportional control using the second proportional control factor Kv in order to obtain a control value Kp*Kv*Δpr, i.e. the test torque M, which is supplied to the adding element 52. As the unit of the test torque M is N*m and the unit of the desired movement Δpr is rad, the control factors Kp*Kv will together have the unit N*m/rad.

The test torque M is then supplied from the adding element 52 to the motor 22, where the brake torque Tbrake counteracts the test torque.

It can be seen that the controller provides a driving force acting on the desired movement Δpr, which driving force is set by the two proportional control factors Kp and Kv. As integrating control is disabled, there is no influence from the integrating control element 48 on the movement of the motor 20. However, the integrating element 48 will provide gravitational torque as a constant output. The brake in turn provides the counteracting force Tbrake. This counteracting force leads to the desired movement not being reached. Furthermore, since if the motor is not moving, the derivate feedback does not contribute to the torque of the motor and even if the motor moves slightly, it is initially not moving so the derivative feedback does not initially contribute to the torque of the motor.

Depending on if the force of the motor is stronger or weaker than the force of the brake, there may be a position change, which may be detected by the motor 22. In order to know if there is a position change or not, the torque evaluating unit 36 obtains a joint position measurement p after the application or provision of the first position command, step 62, where the joint position measurement may be obtained through the position measurement supplied by the motor 22 to the controller 34.

When the measurement has been obtained the difference between the position of the joint position measurement caused by the first position command pr and the originating brake test position is determined for obtaining a total joint movement value Δp, step 64. The total joint movement is thus determined based on the joint position measurement and the originating brake test position.

The torque evaluating unit 36 also determines if the static brake torque fulfils a static brake torque requirement using the first position command and the joint position measurement. In some cases also the originating brake test position is used.

The determining may more particularly involve comparing the total joint movement value Δp with a testing threshold TTH, step 66.

If then the total joint movement is below the threshold, the brake passed the test of the test torque M, step 72, while if it is above the threshold, the brake failed the test of the test torque M.

The test torque M may in one example be set equal to a minimum brake torque, in which case the brake torque requirement would be fulfilled if there is no movement and it would be failed if there was movement. In this case the testing threshold may be set as TTH = 0.

However, the threshold may also be set differently. The test may be passed even if there is certain movement. In the latter case it is possible that more than one position command is used. In this case it is possible that the threshold is set to correspond to a smallest allowed position change for a minimum number test torques M provided by a sequence of joint movement values defining a sequence of desired position changes. In this case, it is possible to return to step 60 after step 70 and repeat the brake torque testing scheme outlined in steps 60 - 68 for a number of different position commands. The desired movement of a position command is then the movement from the latest known joint position. The position commands may then be provided as a sequence of commands with increasing desired movements. If the test is failed before the minimum number of test torques has been tested, the brake torque requirement may be deemed to be failed and otherwise if may be deemed to be fulfilled.

It can be seen that when several tests are performed in the above described way, the torque Kp*KV*(pr-p) from the controller will provide a brake test torque as long as the brake is able to withstand it.
There are some possible variations that may be made. It is possible to test the brake torque with movement in different directions. Typically the robot joint is subject to gravity, which may influence the brake torque test result. This influence can be considered through testing the brake torque in two different directions.
Furthermore, there may be friction in the gearbox. This friction may lead to the motor not being able to reach the desired position when integration is deactivated even though the brake is inactivated. Friction is therefore also considered for a more accurate evaluation of brake torque.

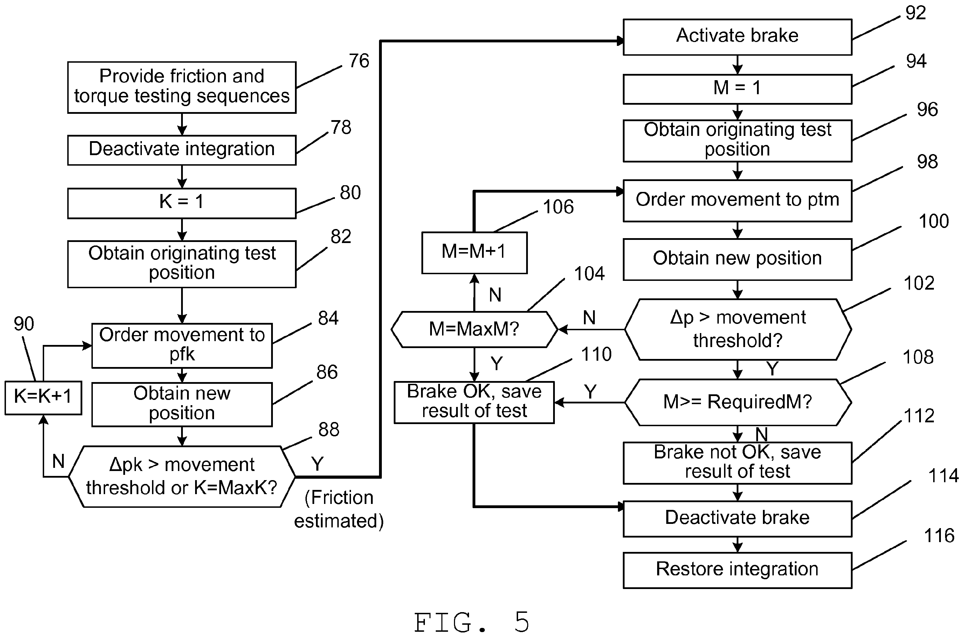

A first embodiment providing combined friction and brake torque estimation will now be described with reference being made to fig. 5, which shows a flow chart of a number of method steps in a method for evaluating a static brake torque of a robot joint using the motor 22 controlled via the robot controller 34.

Also here the motor is standing still when the method is started.
A first sequence of desired friction testing joint movement values and a second sequence of desired brake torque testing joint movement values are provided, step 76. The sequences may here comprise sequences of increasingly higher values, which when used for position commands involve increasingly longer movements. There may here also be provided values with a set step size, which means that a following value in a sequence may be higher than a preceding value by an amount that is the set step size. A friction testing value may in this case be a value setting out a desired movement for testing friction and a torque testing position command may be a command setting out a desired movement for testing brake torque. A friction testing value may therefore be used as a second position command for testing friction and a torque testing value may be used as a third position command for testing brake torque. It is here optionally possible that also a direction command is provided, which indicates in which direction movement is to be made. In this case friction and brake torque may be tested in respect of the same direction. Furthermore it is possible and even likely that the brake testing values are higher than the corresponding friction testing values.

After such sequences have been provided, the torque evaluating unit 36 ensures that no integrating activity is performed. This may be done through integration being deactivated, step 78, for instance through opening the switch 46 or by setting the integrating control factor Ki to zero.

When this has been done a friction investigation scheme is started. In the friction investigation scheme a friction test counter K is first set equal to one, step 80, which is followed by the torque evaluating unit obtaining an originating friction test position, step 82, which is the position of the joint at the time that a friction evaluation is to take place. This position may with advantage be obtained from the robot controller 34, for instance from the second input of the first subtracting element 38.

The torque evaluating unit 36 then provides the controller 34 with a second position command pfk based on a friction testing joint movement value from the first sequence in order to obtain movement of the joint to a target friction test position, step 84. The joint movement value may be the joint movement value that corresponds to the value of the friction test counter K. The second position command pfk may be a command that the motor 22 is to move a certain amount defined by the friction testing joint movement value, such as a suitable number of radians, from the originating friction test position. The second position command pfk, which is applied before brake activation, is provided to the first subtracting element 38 at which the measured position is subtracted in order to obtain the desired movement Δpr.

The controller 34 will in this case provide a driving force acting on the desired movement, which driving force is set by the two proportional control factors and leads to a motor torque of Kp*Kv*Δpr applied on the motor 22. If the friction is negligible, the target position will be reached. However, if the target position is not reached despite no brake being used, then there is friction.

In order to know if there is a position change or not, the torque evaluating unit 36 obtains a joint position measurement p after the application of the second position command pfk, step 86, where the joint position measurement p may be obtained through the position measurement supplied by the motor 22 to the controller 34. The position of this measurement is then a current joint position. This may then be followed by determining of the movement Δpk caused by the second position command in relation to the originating friction test position. This movement may be determined as the difference between the current joint position and the originating friction test position.

The movement Δpk is then compared with a maximum friction movement threshold and the counter value is compared with a maximum counter value MaxK, which is a value corresponding to the number of friction testing commands in the friction testing sequence. In case the counter was not MaxK and the maximum threshold was not crossed, step 88, then further measurements are going to be made. In this case the position obtained in step 86, i.e. the current joint position, will be a new friction test position for the immediately following test. The counter K is now incremented, step 90, and the motor 22 is ordered to move to a following target friction test position of the test sequence using a following second position command pfk, step 84, and the new joint position obtained as a new current joint position, step 86.

However, if the value was above the threshold, step 88, then the friction is determined using the second position command pfk, the at least one proportional control factor Kv, Kp and the joint position measurement. The friction may in this case be estimated based on the movement Δpr and the proportional control factors Kp and Kv. Thereafter the friction testing scheme is ended and the torque testing scheme started.

It can thus be seen that before the ensuing brake activation the torque evaluating unit repeats providing the robot controller with second position commands for moving the joint to a target position, obtains new joint positions and determines the joint movement in relation to the origination friction test position until this joint movement reaches a friction movement threshold, and the friction is determined for the position for which the friction movement threshold is reached.
Also if MaxK was reached, step 88, the friction testing scheme is ended. In this case it is possible that the friction is estimated based on the highest difference Δpk that was obtained. Thereafter follows the brake torque testing scheme, which is started through the activation of the brake of the motor, step 92, which activity is thus performed when the joint is immobile.
This may be done through the torque evaluating unit 36 sending the brake activation signal ba to the brake 20, which in turn applies the brake on the motor 22.
Then a torque test counter M is set equal to one, step 94, which is followed by the torque evaluating unit obtaining an originating brake test position, step 96, which is the position of the joint at the time that a brake torque evaluation is to take place. This position may with advantage be the last position detected in the performing of the friction testing scheme and may thus be obtained from the second input of the first subtracting element 38 of the robot controller 34.
The torque evaluating unit 36 then provides the controller 34 with a third position command ptm for ordering movement of the joint to a target brake torque test position, step 98. The target position is a position that corresponds to a desired joint movement value from the second sequence corresponding to the value of the brake torque test counter M. The third position command may be a command that the motor 22 is to move a certain amount defined by the desired joint movement value, such as a suitable number of radians from the originating brake torque test position. The third position command, which is provided after brake activation, takes account of the previous friction testing joint movement values used as second position commands. A brake torque testing joint movement value used for a third position command may for instance be higher than the friction testing joint movement values. As an alternative the third position command is provided as the sum of a brake torque testing joint movement value and a friction testing joint movement value. The values added in this way may also be of the same order in the two sequences.

The controller will also here provide a motor torque, which is counteracted by the applied brake torque.

The torque evaluating unit 36 then obtains a joint position measurement p after the application of the third position command, step 100, where the joint position measurement may be obtained through the position measurement supplied by the motor 22 to the controller 34. This is followed by determining of the total joint movement value, where the total joint movement value is determined based on the joint position measurement and the originating brake test position.

The torque evaluating unit 36 then determines if a static brake torque of the brake fulfils or fails a static brake torque requirement using the third position command ptm, the joint position measurement and the originating brake test position. This may also here involve comparing the total joint movement value Δp with a testing threshold and determine that the brake torque requirement is fulfilled based on the testing threshold not being exceeded. The testing threshold may thus be set as a maximum allowed position change in relation to the originating brake test position. The threshold may also be set to consider the previously estimated friction.

If then the threshold is not exceeded, step 102, further brake torque tests are to be made. Therefore the position obtained in step 100 is a new brake torque test position, i.e. a position from which a following torque test is to be performed. The counter M is also compared with a maximum counter value MaxM, which is a value corresponding to the number of brake torque testing third position commands that are provided in the second sequence. In case the counter value was not MaxM, step 104, then the counter M is incremented, step 106. Thereafter the motor 22 is ordered to move to a following target position of the test sequence, step 98, and the new position obtained, step 100.

If however the counter value was equal to the maximum counter value, step 104, then the brake is deemed to fulfill the brake torque requirement and the various test results saved, step 110.

If in step 102, the movement threshold was exceeded, the counter value is compared with a minimum counter value, which is a value setting out a minimum number of brake torque tests. This value may correspond to the brake torque testing value in the sequence used in setting of the movement threshold. In case the counter value corresponds to the place in the sequence of the brake torque testing value or of a later brake torque testing value in the second sequence, step 108, then the brake is also deemed to fulfil the brake torque requirement and the test results are saved, step 110. In case the counter value was below the minimum counter value, step 108, then the brake is deemed not to fulfil the brake torque requirement and the results are saved, step 112.

It can thus be seen that the static brake torque requirement is deemed to be failed if the total joint movement value exceeds the movement threshold for a third position command involving a desired position change below the minimum position change. Furthermore, it can be seen that the comparing of the movement threshold is made sequentially and a static brake torque is determined to fulfil the requirement on brake torque for a total joint movement value exceeding the movement threshold for a tested target position corresponding to a joint movement value in the sequence equal to or higher than a minimum number threshold.

In both cases, when the brake is found to fulfil or not fulfill the requirements, the brake torque testing scheme is finished, the brake deactivated, step 114, and integration activity restored, step 116.

It is then possible to move the joint to a start position and investigate of if there are any more tests, in which case new sequences may be obtained and further tests made. After finished testing it is then possible to evaluate the results.

The invention has a number of advantages. As can be seen it is not necessary to measure the torque using external sensors. It can be determined using normal control factors, measurements and commands present in a robot controller. This simplifies the implementation in that it is possible to provide the invention as an additional function in a robot controller, which is an existing device. It is also easy to retrofit existing robot controllers for implementing the invention. Furthermore the determination of if the brake fulfills the brake torque requirements may be determined using only know gains and measured positions. There is no need for using internal torque or current references or current measurements. No extra information needs to be stored, since the integrating element of the controller holds the reference torque information needed.

The determination of the dynamic brake torque is furthermore safe and reliable.

The different units of the brake torque evaluating device 32 and thereby also the torque evaluating unit 36 may be provided in the form of one or more processors together with computer program memory including computer program code for performing the functions of these units. As an alternative they may be provided in the form of one or more Application Specific Integrated Circuits (ASIC) or Field-Programmable Gate Arrays (FPGA). This computer program code may also be provided on one or more data carriers which perform the functionality of the brake torque evaluating device and especially of the torque evaluating unit when the program code thereon is being loaded in a computer forming the brake torque evaluating device. One such data carrier 118 with computer program code 120, in the form of a CD ROM disc, is schematically shown in fig. 6. Such computer program may as an alternative be provided on a server and downloaded therefrom into the computer forming the brake torque evaluating device.

While the invention has been described in connection with what is presently considered to be most practical and preferred embodiments, it is to be understood that the invention is not to be limited to the disclosed embodiments, but on the contrary, is intended to cover various modifications and equivalent arrangements. Therefore the present invention is only to be limited by the following claims.

## Claims

1. A method for evaluating a static brake torque of a brake (20) for a robot joint (16) using a motor (22) controlled via a robot controller (34), the robot controller comprising an integrating control element (48) performing integrating control and at least one proportional control element (40; 50) that performs proportional control using at least one proportional control factor (Kv, Kp), the method comprising the steps of:
- disabling (54; 78) any integrating activity of the robot controller;
performing a friction testing scheme comprising:
- obtaining (82) at least one friction test position of the joint;
- providing (84), before brake activation, the robot controller with a position command (pfk) for moving the joint to a target position, the position command (pfk) is a command corresponding to a joint movement value;
- obtaining (86) a joint position measurement after the application of the position command, and
- determining the friction of the motor using the position command (pfk), the at least one proportional control factor (Kv, Kp) and the joint position measurement;
after the friction testing scheme performing a static brake torque testing scheme comprising:
- activating (56; 92) the brake (20) of the motor (22) when the joint is immobile;
- obtaining (58; 96) at least one brake test position of the joint;
- providing (60; 98), after brake activation, the robot controller with a position command (pr; ptm) for ordering movement of the joint to a target position, the position command (ptm) taking account of the previous friction testing joint movement value;
- obtaining (62; 100) a joint position measurement (p) after the provision of the position command; and
- determining (70, 72; 110, 112) if a static brake torque (Tbrake) of the brake fulfils or fails a static brake torque requirement using the position command (pr; ptm) and the joint position measurement.

2. The method according to claim 1, wherein the position command is set to correspond to a test torque using the at least one proportional control factor.

3. The method according to claim 1 or 2, wherein a first brake test position is an originating brake test position and the determining of if the brake fulfils or fails the static brake torque requirement is based also on the originating brake test position.

4. The method according to claim 3, further comprising determining (64) the difference between position of the joint position measurement and the originating brake test position for obtaining a total joint movement value (Δp), wherein the determining of if the static brake torque requirement is fulfilled or not comprises comparing (66; 102) the total joint movement value (Δp) with a testing threshold and determining (70; 110) that the static brake torque fails the static brake torque requirement based on the total joint movement value exceeding the testing threshold.

5. The method according to claim 4, wherein the position command (ptm) is a position command corresponding to a desired joint movement value in a sequence of torque testing joint movement values involving increasingly longer movements, wherein the comparing of the testing threshold is made sequentially for the sequence of torque testing joint movement values and a static brake torque is determined to fulfil the requirement for a total joint movement value exceeding the testing threshold at the same time as the used joint movement value has a number in the sequence that is equal to or higher than a minimum number threshold.

6. The method according to claim 2 or 3, wherein the test torque is a test torque threshold and the brake fulfils the static brake torque requirement if there is no joint movement.

7. The method according to any previous claim, wherein a first friction test position is an originating friction test position and the position command (pfk) is a position command corresponding to a joint movement value in a sequence of torque testing joint movement values involving increasingly longer joint movements, and further comprising repeating providing (50), before brake activation, the robot controller with a position command (pfk) for moving the joint to a target position and obtaining a current joint position until a difference between a current joint position and the originating friction test position reaches a friction movement threshold, where the friction is determined for the current joint position for which the friction movement threshold is reached.

8. A brake torque evaluating device (32) for evaluating a static brake torque of a brake (20) for a robot joint using a motor (22) controlled via a robot controller (34)that comprises an integrating control element (48) performing integrating control and at least one proportional control element (40; 50) performing proportional control using at least one proportional control factor (Kv, Kp) ; the brake torque evaluating device (32) comprising a torque evaluating unit (36) configured to
- disable any integrating activity of the robot controller;
perform a friction testing scheme in which it is configured to:
- obtain at least one friction test position of the joint;
- provide, before brake activation, the robot controller with a position command (pfk) for moving the joint to a target position, the position command is a command corresponding to a joint movement value;
- obtain a joint position measurement after the application of the position command; and
- determine the friction of the motor using the position command (pfk), the at least one proportional control factor (Kv, Kp) and the joint position measurement;
perform, after the friction testing scheme, a static brake torque testing scheme in which it is configured to:
- activate the brake (20) of the motor (22) when the joint is immobile;
- obtain at least one brake test position of the joint;
- provide, after brake activation, the robot controller with a position command (pr; ptm) for ordering movement of the joint to a target position, the position command (ptm) taking account of the previous friction testing joint movement value;
- obtain a joint position measurement (p) after the provision of the position command; and
- determine if a static brake torque (Tbrake) of the brake fulfils or fails a static brake torque requirement using the position command (pr; ptm) and the joint position measurement.

9. The device according to claim 8, wherein the position command is set to correspond to a test torque using the at least one proportional control factor.

10. The device according to claim 8 or 9, wherein a first brake test position is an originating brake test position and the torque evaluating unit (36) when being configured to determine if the brake fulfils or fails the static brake torque requirement is configured to base the determination also on the originating brake test position.

11. The device according to claim 10, wherein the torque evaluating unit (36) when being configured to determine if the brake fulfils or fails the static brake torque requirement is further configured to determine the difference between the position of the joint position measurement and the originating brake test position for obtaining a total joint movement value (Δp), compare the total joint movement value with a testing threshold and determine that the static brake torque fails the static brake torque requirement based on the total joint movement value exceeding the testing threshold.

12. The device according to claim 11, wherein the position command (ptm) is a position command corresponding to a desired joint movement value in a sequence of torque testing joint movement values involving increasingly longer movements and the torque evaluating unit (36) is configured to compare the determined joint movements with the testing threshold sequentially according to the sequence of torque testing joint movement values and determine that a static brake torque is to fulfil the requirement for a total joint movement value exceeding the testing threshold at the same time as the used joint movement value has a number in the sequence that is equal to or higher than a minimum number threshold.

13. The device according to claim 9 or 10, wherein the test torque is a test torque threshold and the brake fulfils the static brake torque requirement if there is no joint movement.

14. The device according to any of claims 8 - 13, wherein a first friction test position is an originating friction test position, the position command (pfk) is a position command corresponding to a joint movement value in a sequence of torque testing joint movement values involving increasingly longer joint movements, and the torque evaluating unit (36) is configured to repeat providing, before brake activation, the robot controller with a position command (pfk) for moving the joint to a target position and obtain a current joint position until a difference between a current joint position and the originating friction test position reaches a friction movement threshold, where the friction is determined for the current joint position for which the friction movement threshold is reached.

15. The device according to any of claims 8 - 14, further comprising the robot controller (34).

16. A robot arrangement comprising an industrial robot (10) with at least one motor (22) for moving a corresponding joint (16), a robot controller (34) comprising an integrating control element (48) performing integrating control and at least one proportional control element (40, 50) and a brake torque evaluating device (32) according to any of claims 8 - 15.

17. A computer program product for evaluating a static brake torque of a brake for a robot joint (16) using a motor (22) controlled via a robot controller (34), the robot controller comprising an integrating control element (48) performing integrating control and at least one proportional control element (40; 50), the computer program product comprising a data carrier (118) with computer program code (120) which when run in a torque evaluating unit (36) of a brake torque evaluating device (32) according to claim 8 causes the torque evaluating unit to perform the method steps according to claim 1.

## Patentansprüche

1. Verfahren zur Auswertung eines statischen Bremsmoments einer Bremse (20) für ein Robotergelenk (16) unter Verwendung eines Motors (22), der über eine Robotersteuerung (34) gesteuert wird, wobei die Robotersteuerung ein integrierendes Steuerungselement (48), das eine integrierende Steuerung ausführt, und mindestens ein Proportionalsteuerungselement (40; 50), das eine Proportionalsteuerung unter Verwendung mindestens eines Proportionalsteuerungsfaktors (Kv, Kp) ausführt, umfasst, wobei das Verfahren folgende Schritte umfasst:
- Deaktivieren (54; 78) jeglicher integrierender Aktivität der Robotersteuerung;
Ausführen eines Friktionstestschemas, das Folgendes umfasst:
- Beschaffen (82) mindestens einer Friktionstestposition des Gelenks;
- vor der Bremsaktivierung Bereitstellen (84) eines Positionsbefehls (pfk) für die Robotersteuerung zum Bewegen des Gelenks zu einer Zielposition, wobei der Positionsbefehl (pfk) ein Befehl ist, der einem Gelenkbewegungswert entspricht;
- Beschaffen (86) eines Gelenkpositionsmesswerts nach dem Anwenden des Positionsbefehls, und
- Bestimmen der Friktion des Motors unter Verwendung des Positionsbefehls (pfk), des mindestens einen Proportionalsteuerungsfaktors (Kv, Kp) und des Gelenkpositionsmesswerts;
nach dem Friktionstestschema Ausführen eines Testschemas für ein statisches Bremsmoment, das Folgendes umfasst:
- Aktivieren (56; 92) der Bremse (20) des Motors (22), wenn das Gelenk unbeweglich ist;
- Beschaffen (58; 96) mindestens einer Bremstestposition des Gelenks;
- nach der Bremsaktivierung Bereitstellen (60; 98) eines Positionsbefehls (pr; ptm) für die Robotersteuerung zum Befehlen einer Bewegung des Gelenks zu einer Zielposition, wobei der Positionsbefehl (ptm) den früheren Friktionstest-Gelenkbewegungswert berücksichtigt;
- Beschaffen (62; 100) eines Gelenkpositionsmesswerts (p) nach dem Bereitstellen des Positionsbefehls; und
- Feststellen (70, 72; 110, 112), ob ein statisches Bremsmoment (Tbrake) der Bremse eine Anforderung eines statischen Bremsmoments erfüllt oder verfehlt, unter Verwendung des Positionsbefehls (pr; ptm) und der Gelenkpositionsmessung.

2. Verfahren nach Anspruch 1, wobei der Positionsbefehl unter Verwendung des mindestens einen Proportionalsteuerungsfaktors so eingestellt wird, dass er einem Testdrehmoment entspricht.

3. Verfahren nach Anspruch 1 oder 2, wobei eine erste Bremstestposition eine ursprüngliche Bremstestposition ist und das Feststellen, ob die Bremse die Anforderung des statischen Bremsmoments erfüllt oder verfehlt, auch auf die ursprüngliche Bremstestposition gründet.

4. Verfahren nach Anspruch 3, das ferner ein Bestimmen (64) der Differenz zwischen der Position der Gelenkspositionsmessung und der ursprünglichen Bremsposition umfasst, um einen Gesamt-Gelenkbewegungswert (Δp) zu beschaffen, wobei das Feststellen, ob die Anforderung des statischen Bremsmoments erfüllt ist oder nicht, ein Vergleichen (66; 102) des Gesamt-Gelenkbewegungswertes (Δp) mit einer Testschwelle und auf der Grundlage dessen, dass der Gesamt-Gelenkbewegungswert die Testschwelle überschreitet, das Feststellen (70; 110), dass das statische Bremsmoment die Anforderung des statischen Bremsmoments verfehlt, umfasst.

5. Verfahren nach Anspruch 4, wobei der Positionsbefehl (ptm) ein Positionsbefehl ist, der einem gewünschten Gelenkbewegungswert in einer Sequenz von Drehmomenttest-Gelenkbewegungswerten mit zunehmend längeren Bewegungen entspricht, wobei das Vergleichen der Testschwelle sequenziell für die Sequenz von Drehmomenttest-Gelenkbewegungswerten ausgeführt wird, und festgestellt wird, dass ein statisches Bremsmoment die Anforderung erfüllt, dass ein Gesamt-Gelenkbewegungswert die Testschwelle zu der gleichen Zeit überschreitet, zu welcher der verwendete Gelenkbewegungswert in der Sequenz eine Zahl aufweist, die genau so groß wie oder größer als eine minimale Zahlenschwelle ist.

6. Verfahren nach Anspruch 2 oder 3, wobei das Testdrehmoment eine Testdrehmomentschwelle ist und die Bremse die Anforderung des statischen Bremsmoments erfüllt, wenn keine Gelenkbewegung vorliegt.

7. Verfahren nach einem der vorangehenden Ansprüche, wobei eine erste Friktionstestposition eine ursprüngliche Friktionstestposition ist und der Positionsbefehl (pfk) ein Positionsbefehl ist, der einem Gelenkbewegungswert in einer Sequenz von Drehmomenttest-Gelenkbewegungswerten, die zunehmend längere Gelenkbewegungen beinhalten, entspricht, und ferner, vor der Bremsaktivierung, ein wiederholtes Bereitstellen (50) eines Positionsbefehls (pfk) für die Robotersteuerung, um das Gelenk zu einer Zielposition zu bewegen, und ein Beschaffen einer aktuellen Gelenkposition umfasst, bis eine Differenz zwischen einer aktuellen Gelenkposition und der ursprünglichen Friktionstestposition eine Friktionsbewegungsschwelle erreicht, wo die Friktion für die aktuelle Gelenkposition, für welche die Friktionsbewegungsschwelle erreicht ist, festgestellt wird.

8. Vorrichtung (32) zur Auswertung eines statischen Bremsmoments einer Bremse (20) für ein Robotergelenk unter Verwendung eines Motors (22), der über eine Robotersteuerung (34) gesteuert wird, die ein integrierendes Steuerungselement (48) umfasst, das eine integrierende Steuerung ausführt, und mindestens ein Proportionalsteuerungselement (40; 50), das eine Proportionalsteuerung unter Verwendung mindestens eines Proportionalsteuerungsfaktors (Kv, Kp) ausführt, wobei die Vorrichtung (32) zur Auswertung eines Bremsmoments eine Drehmomentauswertungseinheit (36) umfasst, die dazu ausgelegt ist:
- jegliche integrierende Aktivität der Robotersteuerung zu deaktivieren;
ein Friktionstestschema auszuführen, in dem sie dazu ausgelegt ist:
- mindestens eine Friktionstestposition des Gelenks zu beschaffen;
- vor der Bremsaktivierung der Robotersteuerung einen Positionsbefehl (pfk) für die Robotersteuerung zum Bewegen des Gelenks zu einer Zielposition bereitzustellen, wobei der Positionsbefehl ein Befehl ist, der einem Gelenkbewegungswert entspricht;
- einen Gelenkpositionsmesswert nach dem Anwenden des Positionsbefehls zu beschaffen, und
- die Friktion des Motors unter Verwendung des Positionsbefehls (pfk), des mindestens einen Positionssteuerungsfaktors (Kv, Kp) und des Gelenkpositionsmesswerts zu bestimmen;
nach dem Friktionstestschema ein Testschema für ein statisches Bremsmoment auszuführen, in dem sie dazu ausgelegt ist:
- die Bremse (20) des Motors (22) zu aktivieren, wenn das Gelenk unbeweglich ist;
- mindestens eine Bremstestposition des Gelenks zu beschaffen;
- nach der Bremsaktivierung der Robotersteuerung einen Positionsbefehl (pr; ptm) bereitzustellen, um eine Bewegung des Gelenks zu einer Zielposition anzuweisen, wobei der Positionsbefehl (ptm) den früheren Wert der Friktionstest-Gelenkbewegung berücksichtigt;
- einen Gelenkpositionsmesswert (p) nach dem Bereitstellen des Positionsbefehls zu beschaffen; und
- festzustellen, ob ein statisches Bremsmoment (Tbrake) der Bremse eine Anforderung eines statischen Bremsmoments erfüllt oder verfehlt, unter Verwendung des Positionsbefehls (pr; ptm) und des Gelenkpositionsmesswertes.

9. Vorrichtung nach Anspruch 8, wobei der Positionsbefehl unter Verwendung des mindestens einen Proportionalsteuerungsfaktors so festgelegt wird, dass er einem Testdrehmoment entspricht.

10. Vorrichtung nach Anspruch 8 oder 9, wobei eine erste Bremstestposition eine ursprüngliche Bremstestposition ist und die Drehmomentauswertungseinheit (36) dann, wenn sie dazu ausgelegt ist festzustellen, ob die Bremse die Anforderung des statischen Bremsmoments erfüllt oder verfehlt, dazu ausgelegt ist, diese Feststellung auch auf die ursprüngliche Bremstestposition zu gründen.

11. Vorrichtung nach Anspruch 10, wobei die Drehmomentauswertungseinheit (36) dann, wenn sie dazu ausgelegt ist festzustellen, ob die Bremse die Anforderung des statischen Bremsmoments erfüllt oder verfehlt, ferner dazu ausgelegt ist, die Differenz zwischen der Position der Gelenkspositionsmessung und der ursprünglichen Bremsposition festzustellen, um einen Gesamt-Gelenkbewegungswert (Δp) zu beschaffen, den Gesamt-Gelenkbewegungswert (Δp) mit einer Testschwelle zu vergleichen und auf der Grundlage dessen, dass der Gesamt-Gelenkbewegungswert die Testschwelle überschreitet, festzustellen, dass das statische Bremsmoment die Anforderung des statischen Bremsmoments verfehlt.

12. Vorrichtung nach Anspruch 11, wobei der Positionsbefehl (ptm) ein Positionsbefehl ist, der einem gewünschten Gelenkbewegungswert in einer Sequenz von Drehmomenttest-Gelenkbewegungswerten mit zunehmend längeren Bewegungen entspricht und die Drehmomentauswertungseinheit (36) dazu ausgelegt ist, die festgestellten Gelenkbewegungen sequenziell mit der der Testschwelle entsprechend der Sequenz von Drehmomenttest-Gelenkbewegungswerten zu vergleichen und festzustellen, dass ein statisches Bremsmoment die Anforderung erfüllt, dass ein Gesamt-Gelenkbewegungswert die Testschwelle zu der gleichen Zeit überschreitet, zu welcher der verwendete Gelenkbewegungswert in der Sequenz eine Zahl aufweist, die genau so groß wie oder größer als eine minimale Zahlenschwelle ist.

13. Verfahren nach Anspruch 9 oder 10, wobei das Testdrehmoment eine Testdrehmomentschwelle ist und die Bremse die Anforderung des statischen Bremsmoments erfüllt, wenn keine Gelenkbewegung vorliegt.

14. Verfahren nach einem der Ansprüche 8-13, wobei eine erste Friktionstestposition eine ursprüngliche Friktionstestposition ist, der Positionsbefehl (pfk) ein Positionsbefehl ist, der einem Gelenkbewegungswert in einer Sequenz von Drehmomenttest-Gelenkbewegungswerten, die zunehmend längere Gelenkbewegungen beinhalten, entspricht, und die Drehmomentauswertungseinheit (36) dazu ausgelegt ist, vor der Bremsaktivierung der Robotersteuerung wiederholt einen Positionsbefehl (pfk) bereitzustellen, um das Gelenk zu einer Zielposition zu bewegen, und eine aktuelle Gelenkposition zu beschaffen, bis eine Differenz zwischen einer aktuellen Gelenkposition und der ursprünglichen Friktionstestposition eine Friktionsbewegungsschwelle erreicht, wo die Friktion für die aktuelle Gelenkposition, für welche die Friktionsbewegungsschwelle erreicht ist, festgestellt wird.

15. Vorrichtung nach einem der Ansprüche 8-14, die ferner die Robotersteuerung (34) umfasst.

16. Roboteranordnung, die einen Industrieroboter (10) mit mindestens einem Motor (22) zu Bewegen eines entsprechenden Gelenks (16) umfasst, wobei eine Robotersteuerung (34) ein integrierendes Steuerungselement (48) umfasst, das eine integrierende Steuerung ausführt, und mindestens ein Proportionalsteuerungselement (40, 50) und eine Bremsmomentauswertungsvorrichtung (32) nach einem der Ansprüche 8-15.

17. Computerprogrammprodukt zum Auswerten eines statischen Bremsmoments einer Bremse für ein Robotergelenk (16) unter Verwendung eines über eine Robotersteuerung (34) gesteuerten Motors (22), wobei die Robotersteuerung ein integrierendes Steuerungselement (48) umfasst, das integrierende Steuerung ausführt, und mindestens ein Proportionalsteuerungselement (40; 50), wobei das Computerprogrammprodukt einen Datenträger (118) mit Computerprogrammcode (120) umfasst, der, wenn er in einer Drehmomentauswertungseinheit (36) einer Bremsmomentauswertungsvorrichtung (32) nach Anspruch 8 ausgeführt wird, die Drehmomentauswertungseinheit veranlasst, die Verfahrensschritte nach Anspruch 1 auszuführen.

## Revendications

1. Procédé d'évaluation d'un couple de freinage statique d'un frein (20) pour une articulation de robot (16) à l'aide d'un moteur (22) commandé par l'intermédiaire d'un dispositif de commande de robot (34), le dispositif de commande de robot comprenant un élément de commande d'intégration (48) effectuant une commande d'intégration et au moins un élément de commande proportionnelle (40 ; 50) qui effectue une commande proportionnelle à l'aide d'au moins un facteur de commande proportionnelle (Kv, Kp),
le procédé comprenant les étapes consistant à :
désactiver (54 ; 78) toute activité d'intégration du dispositif de commande de robot ;
effectuer un programme d'essai de friction comprenant les étapes consistant à :
obtenir (82) au moins une position d'essai de friction de l'articulation ;
fournir (84) au dispositif de commande de robot, avant l'activation du frein, une instruction de position (pfk) pour déplacer l'articulation vers une position cible, l'instruction de position (pfk) étant une instruction correspondant à une valeur de mouvement d'articulation ;
obtenir (86) une mesure de position d'articulation après l'application de l'instruction de position, et
déterminer la friction du moteur à l'aide de l'instruction de position (pfk), de l'au moins un facteur de commande proportionnel (Kv, Kp) et de la mesure de position d'articulation ;
après le programme d'essai de friction, effectuer un programme d'essai de couple de freinage statique comprenant les étapes consistant à :
activer (56 ; 92) le frein (20) du moteur (22) lorsque l'articulation est immobile ;
obtenir (58 ; 96) au moins une position d'essai de freinage de l'articulation ;
fournir (60 ; 98) au dispositif de commande de robot, après l'activation du frein, une instruction de position (pr ; ptm) pour commander le déplacement de l'articulation vers une position cible, l'instruction de position (ptm) tenant compte de la valeur de mouvement d'articulation d'essai de friction précédente ;
obtenir (62 ; 100) une mesure de position d'articulation (p) après la fourniture de l'instruction de position ; et
déterminer (70, 72 ; 110, 112) si un couple de freinage statique (Tbrake) du frein satisfait ou non une exigence de couple de freinage statique à l'aide de l'instruction de position (pr ; ptm) et de la mesure de position d'articulation.

2. Procédé selon la revendication 1, l'instruction de position étant réglée pour correspondre à un couple d'essai à l'aide de l'au moins un facteur de commande proportionnel.

3. Procédé selon la revendication 1 ou 2, une première position d'essai de frein étant une position d'essai de frein d'origine et la détermination du fait de savoir si le frein satisfait ou non l'exigence de couple de freinage statique étant également basée sur la position d'essai de frein d'origine.

4. Procédé selon la revendication 3, comprenant en outre l'étape consistant à déterminer (64) la différence entre la position de la mesure de position d'articulation et la position d'essai de frein d'origine pour obtenir une valeur de mouvement d'articulation totale (Δp), la détermination du fait de savoir si l'exigence de couple de freinage statique est satisfaite ou non comprenant les étapes consistant à comparer (66 ; 102) la valeur de mouvement d'articulation totale (Δp) à un seuil d'essai et à déterminer (70 ; 110) que le couple de freinage statique ne satisfait pas l'exigence de couple de freinage statique sur la base du dépassement du seuil d'essai par la valeur de mouvement d'articulation totale.

5. Procédé selon la revendication 4, l'instruction de position (ptm) étant une instruction de position correspondant à une valeur de mouvement d'articulation souhaitée dans une séquence de valeurs de mouvement d'articulation d'essai de couple impliquant des mouvements de plus en plus longs, la comparaison du seuil d'essai étant effectuée séquentiellement pour la séquence de valeurs de mouvement d'articulation d'essai de couple et un couple de freinage statique étant déterminé comme satisfaisant l'exigence de dépassement du seuil d'essai par la valeur de mouvement d'articulation totale en même temps que la valeur de mouvement d'articulation utilisée a un nombre dans la séquence qui est égal ou supérieur à un seuil numérique minimal.

6. Procédé selon la revendication 2 ou 3, le couple d'essai étant un seuil de couple d'essai et le frein satisfaisant l'exigence de couple de freinage statique s'il n'y a pas de mouvement d'articulation.

7. Procédé selon l'une quelconque des revendications précédentes, une première position d'essai de friction étant une position d'essai de friction d'origine et l'instruction de position (pfk) étant une instruction de position correspondant à une valeur de mouvement d'articulation dans une séquence de valeurs de mouvement d'articulation d'essai de couple impliquant des mouvements d'articulation toujours plus longs, et comprenant en outre les étapes consistant à répéter la fourniture (50) au dispositif de commande de robot, avant activation du frein, d'une instruction de position (pfk) pour déplacer l'articulation vers une position cible et obtenir une position d'articulation actuelle jusqu'à ce qu'une différence entre une position d'articulation actuelle et la position d'essai de friction d'origine atteigne un seuil de mouvement de friction, la friction étant déterminée pour la position d'articulation actuelle pour laquelle le seuil de mouvement de friction est atteint.

8. Dispositif d'évaluation de couple de freinage (32) pour évaluer un couple de freinage statique d'un frein (20) pour une articulation de robot à l'aide d'un moteur (22) commandé par l'intermédiaire d'un dispositif de commande de robot (34) qui comprend un élément de commande d'intégration (48) effectuant une commande d'intégration et au moins un élément de commande proportionnelle (40 ; 50) effectuant une commande proportionnelle à l'aide d'au moins un facteur de commande proportionnelle (Kv, Kp) ;
le dispositif d'évaluation de couple de freinage (32) comprenant une unité d'évaluation de couple (36) conçue pour
désactiver toute activité d'intégration du dispositif de commande de robot ;
effectuer un programme d'essai de friction dans lequel il est conçu pour :
obtenir au moins une position d'essai de friction de l'articulation ;
fournir au dispositif de commande de robot, avant l'activation du frein, une instruction de position (pfk) pour déplacer l'articulation vers une position cible, l'instruction de position étant une instruction correspondant à une valeur de mouvement d'articulation ;
obtenir une mesure de position d'articulation après l'application de l'instruction de position ; et
déterminer la friction du moteur à l'aide de l'instruction de position (pfk), de l'au moins un facteur de commande proportionnel (Kv, Kp) et de la mesure de position d'articulation ;
effectuer, après le programme d'essai de friction, un programme d'essai de couple de freinage statique dans lequel il est conçu pour :
activer le frein (20) du moteur (22) lorsque l'articulation est immobile ;
obtenir au moins une position d'essai de frein de l'articulation ;
fournir au dispositif de commande de robot, après l'activation du frein, une instruction de position (pr ; ptm) pour commander le déplacement de l'articulation vers une position cible, l'instruction de position (ptm) tenant compte de la valeur de mouvement d'articulation d'essai de friction précédente ;
obtenir une mesure de position d'articulation (p) après la fourniture de l'instruction de position ; et
déterminer si un couple de freinage statique (Tbrake) du frein satisfait ou non une exigence de couple de freinage statique à l'aide de l'instruction de position (pr ; ptm) et de la mesure de position d'articulation.

9. Dispositif selon la revendication 8, l'instruction de position étant réglée pour correspondre à un couple d'essai à l'aide de l'au moins un facteur de commande proportionnel.

10. Dispositif selon la revendication 8 ou 9, une première position d'essai de frein étant une position d'essai de frein d'origine et l'unité d'évaluation de couple (36), lorsqu'elle est conçue pour déterminer si le frein satisfait ou non l'exigence de couple de freinage statique, étant conçue pour baser la détermination également sur la position d'essai de frein d'origine.

11. Dispositif selon la revendication 10, l'unité d'évaluation de couple (36), lorsqu'elle est conçue pour déterminer si le frein satisfait ou non l'exigence de couple de freinage statique, étant en outre conçue pour déterminer la différence entre la position de la mesure de position d'articulation et la position d'essai de frein d'origine pour obtenir une valeur de mouvement d'articulation totale (Δp), comparer la valeur de mouvement d'articulation totale à un seuil d'essai et déterminer si le couple de freinage statique ne satisfait pas l'exigence de couple de freinage statique sur la base du dépassement du seuil d'essai par la valeur de mouvement d'articulation totale.

12. Dispositif selon la revendication 11, l'instruction de position (ptm) étant une instruction de position correspondant à une valeur de mouvement d'articulation souhaitée dans une séquence de valeurs de mouvement d'articulation d'essai de couple impliquant des mouvements de plus en plus longs et l'unité d'évaluation de couple (36) étant conçue pour comparer les mouvements d'articulation déterminés au seuil d'essai de manière séquentielle selon la séquence des valeurs de mouvement d'articulation d'essai de couple et déterminer qu'un couple de freinage statique doit satisfaire l'exigence de dépassement du seuil d'essai par une valeur de mouvement d'articulation totale en même temps que la valeur de mouvement d'articulation utilisée a un nombre dans la séquence qui est égal ou supérieur au seuil numérique minimal.

13. Dispositif selon la revendication 9 ou 10, le couple d'essai étant un seuil de couple d'essai et le frein satisfaisant l'exigence de couple de freinage statique s'il n'y a pas de mouvement d'articulation.

14. Dispositif selon l'une quelconque des revendications 8 à 13, une première position d'essai de friction étant une position d'essai de friction d'origine, l'instruction de position (pfk) étant une instruction de position correspondant à une valeur de mouvement d'articulation dans une séquence de valeurs de mouvement d'articulation d'essai de couple impliquant des mouvements d'articulation de plus en plus longs, et l'unité d'analyse de couple (36) étant conçue pour répéter la fourniture au dispositif de commande de robot, avant l'activation du frein, d'une instruction de position (pfk) pour déplacer l'articulation vers une position cible et obtenir une position d'articulation actuelle jusqu'à ce qu'une différence entre une position d'articulation actuelle et la position d'essai de friction d'origine atteigne un seuil de mouvement de friction, la friction étant déterminée pour la position d'articulation actuelle pour laquelle le seuil de mouvement de friction est atteint.

15. Dispositif selon l'une quelconque des revendications 8 à 14, comprenant en outre le dispositif de commande de robot (34).

16. Agencement de robot comprenant un robot industriel (10) avec au moins un moteur (22) pour déplacer une articulation (16) correspondante, un dispositif de commande de robot (34) comprenant un élément de commande d'intégration (48) effectuant une commande d'intégration et au moins un élément de commande proportionnelle (40, 50) et un dispositif (32) d'évaluation de couple de freinage selon l'une quelconque des revendications 8 à 15.

17. Produit de programme informatique pour évaluer un couple de freinage statique d'un frein pour une articulation de robot (16) à l'aide d'un moteur (22) commandé par l'intermédiaire d'un dispositif de commande de robot (34), le dispositif de commande de robot comprenant un élément de commande d'intégration (48) effectuant une commande d'intégration et au moins un élément de commande proportionnelle (40 ; 50), le produit de programme informatique comprenant un support de données (118) avec un code de programme informatique (120) qui, lorsqu'il est exécuté dans une unité d'évaluation de couple (36) d'un dispositif d'évaluation de couple de freinage (32) selon la revendication 8, amène l'unité d'évaluation de couple à effectuer les étapes de procédé selon la revendication 1.
